# EUROPEAN PATENT APPLICATION

(11) **EP 2 695 665 A1**
(43) Date of publication of application: **12.02.2014**
(21) Application number: 13003830.0
(22) Date of filing: 01.08.2013
(51) Int. Cl.: B01D 61/50, B01D 63/08

(54) **Method for producing chamber frame for dialytic cell**

(30) Priority: 06.08.2012 JP 2012174143
(71) Applicant: AGC Engineering Co., Ltd., Chiba-shi, Chiba 261-7119 (JP)
(72) Inventor: Matsumura, Yukio, Chiba-shi, Chiba, 261-7119 (JP); Ohkawa, Shuichi, Chiba-shi, Chiba, 261-7119 (JP); Yuki, Tadao, Chiba-shi, Chiba, 261-7119 (JP); Ohshima, Kazumi, Chiba-shi, Chiba, 261-7119 (JP)
(74) Representative: Müller-Boré & Partner Patentanwälte PartG mbB

(57) **Abstract**

To provide a method for easily producing a chamber frame for a dialytic cell excellent in the sealing property and the heat resistance, at a low cost.

A crosslinked rubber sheet comprising ethylene propylene rubber such as EPM or EPDM, punched into a frame form to form a gasket 1 of a chamber frame 10, is deposed on a base 7, and a net 15 made of a polyolefin to be a spacer at a flow path portion is disposed inside an opening 3. Then, as a bonding agent to bond the gasket 1 and the net 15, a non-crosslinked rubber 21 is disposed in a strip-form on the net 15, followed by pressing under heating to attach the gasket 1 and the net 15 to each other.

## Description

### TECHNICAL FIELD

The present invention relates to a method for producing a chamber frame for a dialytic cell. Particularly, it relates to a method for easily producing a chamber frame for a dialytic cell excellent in the sealing property and the heat resistance, at a low cost.

### BACKGROUND ART

An electrodialytic cell using an ion exchange membrane widely known at present is usually clamped type. Cation exchange membranes and anion exchange membranes are alternately laminated with a chamber frame sandwiched therebetween and aligned between electrodes, and both ends are clamped by a clamping frame, whereby concentrating chambers and demineralizing chambers are alternately formed inside the electrodialytic cell.

Here, a chamber frame comprises a frame-form sheet to form a side wall of a concentrating chamber or a demineralizing chamber, and inside the sheet, a liquid-passing spacer having a function to keep a distance between a cation exchange membrane and an anion exchange membrane in the concentrating chamber or the demineralizing chamber (Patent Document 1).

Heretofore, such a chamber frame to be used for a dialytic cell has been produced as followed. That is, a thermoplastic resin sheet having an opening to form a frame portion of the chamber frame, and a net (for example, made of a polyethylene or polypropylene) to be a spacer placed in a flow path of the chamber frame, are punched into predetermined shapes, and attached to each other by welding the outer peripheral edge of the net to the opening peripheral edge of the frame-form sheet by means of ultrasonic spot welder, to obtain a finished product.

Further, according to this process, in a case where a rib is to be formed on the frame portion of the chamber frame so as to improve the sealing performance, the shape of the rib is determined by the surface shape of the sheet as a material, and is thereby a continuously patterned shape such as a cross-rib shape or an embossed shape, in view of the sheet preparation method.

### PRIOR ART DOCUMENT

### PATENT DOCUMENT

Patent Document 1: JP-B-2-43528

### DISCLOSURE OF INVENTION

### TECHNICAL PROBLEM

However, the chamber frame prepared by this process may sometimes deteriorate the dialysis performance due to an increase in the amount of liquid leak or breakage of the ion exchange membrane when used as a chamber frame, since a sag or wrinkles of the net are significant, and the unevenness of the thickness at a part where the frame-form sheet and the net are welded is significant.

Further, since a thermoplastic resin sheet is employed, the chamber frame is poor in the heat resistance, and if used at a high temperature of at least 60°C, due to heat deformation of the frame portion and the rib which contribute to the sealing performance, it may cause liquid leak and may have a drawback such that it cannot be reused, in some cases.

### SOLUTION TO PROBLEM

The present invention has been made to solve the above mentioned conventional problems, and it is an object of the present invention to provide a method for easily producing a chamber frame for a dialytic cell excellent in the sealing property and the heat resistance, at a low cost.

The present inventors have conducted extensive studies to achieve the above object and as a result, accomplished the present invention.

That is, the present invention provides the following.
[1] A method for producing a chamber frame for a dialytic cell, which comprises:
   disposing a net made of a plastic to a cavity inside an edge of an opening formed on a gasket of a crosslinked rubber comprising ethylene propylene rubber having a shore A hardness as specified in JIS K6253 of from 55 to 88, without or with a certain gap with the edge; and
   disposing a non-crosslinked rubber comprising ethylene propylene rubber on the upper side or lower side of the net without or with a certain gap with the edge, disposing a heating press heater on the opposite side of the non-crosslinked rubber from the net side, and pressing the non-crosslinked rubber against the net while heating the non-crosslinked rubber by the heating press heater to crosslink the non-crosslinked rubber, thereby to attach the gasket and the net to each other.
[2] The method for producing a chamber frame for a dialytic cell according to [1], wherein the heating press heater is disposed so that its side edge on the gasket side protrudes outside the edge of the opening over one side edge of the non-crosslinked rubber, so as to cover a part of the gasket, and/or so that its side edge on the net side protrudes above the cavity inside the edge of the opening over the other side edge of the non-crosslinked rubber, so as to cover a part of the net.
[3] The method for producing a chamber frame for a dialytic cell according to [1] or [2], wherein the sheet surface of the gasket is in a fabric form.
[4] The method for producing a chamber frame for a dialytic cell according to any one of [1] to [3], wherein the material of the net is a polypropylene or a polyethylene.
[5] The method for producing a chamber frame for a dialytic cell according to any one of [1] to [4], wherein the non-crosslinked rubber contains as a crosslinking agent a peroxide crosslinking agent having a 10-hour half-life temperature of at most 120°C.
[6] The method for producing a chamber frame for a dialytic cell according to any one of [1] to [5], wherein the heating press heater has a size with a length of from 200 mm to 2,000 mm and a width of from 5mm to 70 mm.
[7] The method for producing a chamber frame for a dialytic cell according to any one of [1] to [6], wherein the non-crosslinked rubber is pressed against the net while being heated by the heating press heater, under a pressure of from 0.05 MPa to 5.0 MPa at a heating temperature of from 100°C to 180°C for a heating time of from 1 to 600 seconds.

### ADVANTAGEOUS EFFECTS OF INVENTION

According to the production method of the present invention, a chamber frame for a dialytic cell excellent in the sealing property and the heat resistance can easily be produced at a low cost.

### BRIEF DESCRIPTION OF DRAWINGS

Fig. 1 is a diagram illustrating a chamber frame according to an embodiment of the present invention.
Fig. 2 is a diagram illustrating a method to bond a net to a gasket.

### DESCRIPTION OF EMBODIMENTS

Now, the present invention will be described in detail with reference to the preferred embodiments.

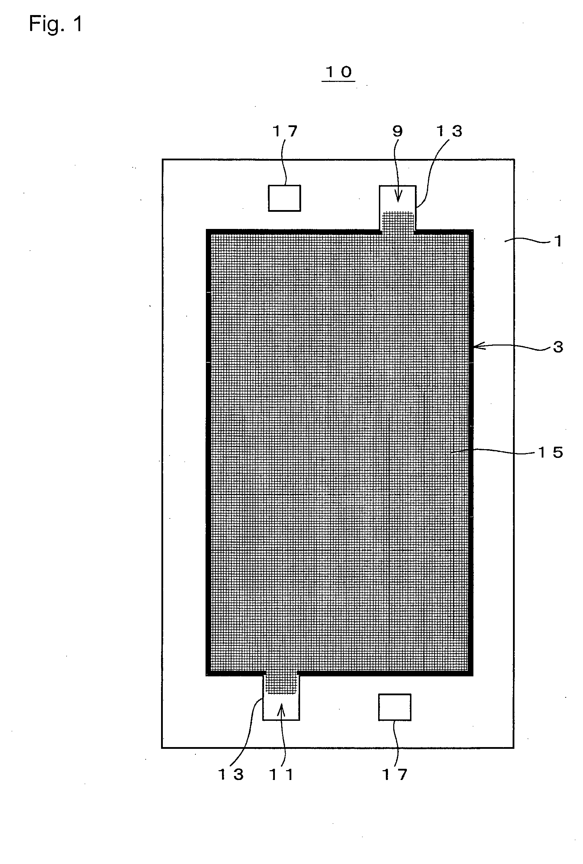

A diagram illustrating a chamber frame according to an embodiment of the present invention is shown in Fig. 1. In Fig. 1, at a center portion of a gasket 1 of a chamber frame 10, a quadrangular opening 3 is formed. To a communicating port 9 and a communicating port 11 communicated to the opening 3, a distributor 13 to secure a liquid flow path is fitted. On this distributor 13, a plurality of fine grooves (not shown) are impressed.

The distributor 13 is excellent in the heat resistance and the liquid dispersion property, and has a structure to prevent internal leak. The distributor 13 is produced by injection molding.

The gasket 1 is made of a crosslinked rubber comprising ethylene propylene rubber, and produced by being punched into a frame form by a punch. Further, on the gasket 1, supply duct holes 17 are provided.

Inside of the opening 3, a net 15 made of a plastic to be a spacer at a flow path portion of the chamber frame 10 is disposed. This net 15 is disposed so that the cation exchange membrane and the anion exchange membrane will not be in contact with each other, and so that a liquid to be treated will be dispersed.

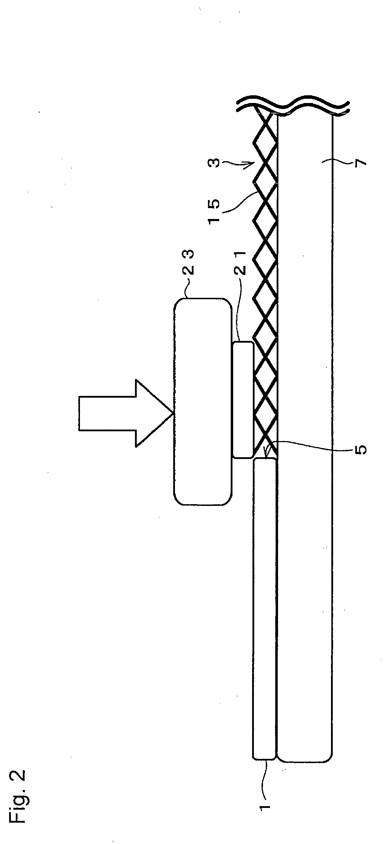

In Fig. 2, a method to bond the net 15 to the gasket 1 is shown.

In Fig. 2, the gasket 1 is placed on a base 7. A portion inside an edge 5 which is one side of the opening 3 constitutes a cavity. Inside the cavity, the net 15 is disposed.

The position of the net 15 is at a level such that it is in contact with the edge 5 of the opening 3, and the net 15 preferably does not protrude on the gasket 1. Further, in a case where a gap is provided between the net 1 and the edge 5, the gap is preferably within 3 mm, more preferably within 1 mm.

Further, it is preferred to dispose a non-crosslinked rubber 21 comprising ethylene propylene rubber on the upper side of the net 15 and inside the edge 5 of the opening 3 so that there is no gap with the edge 5. However, the non-crosslinked rubber 21 may be disposed with a certain gap with the edge 5. The gap is preferably from 0 mm to 1 mm. The non-crosslinked rubber 21 has a role as a bonding agent to bond the crosslinked rubber of the gasket 1 and the net 15 made of a plastic.

The non-crosslinked rubber 21 is in a strip form having a width of preferably from 1 to 10 mm, more preferably from 3 to 7 mm.

Further, if the non-crosslinked rubber 21 is thick, wrinkles or a sag may form on the net at the time of pressing under heating. Thus, the thickness of the non-crosslinked rubber 21 is preferably equal to the thickness of the gasket 1.

Still further, on the upper side of the non-crosslinked rubber 21, a rectangular heating press heater 23 is disposed along the edge 5 so as to cover the entire edge 5, to carry out welding.

It is preferred to dispose the heating press heater 23 so that its edge on the left side in Fig. 2 protrudes outside the edge 5 of the opening 3 over the left side edge of the non-crosslinked rubber 21, so as to cover a part of the gasket 1.

On the other hand, it is preferred to dispose the heating press heater 23 so that its right side edge protrudes above the cavity inside the edge 5 of the opening 3 over the right side edge of the non-crosslinked rubber 21, so as to cover a part of the net 15.

The heating press heater 23 is constituted to heat the non-crosslinked rubber 21 while pressing it from above.

By heating the non-crosslinked rubber 21 while pressing it by the heating press heater 23, the non-crosslinked rubber 21 bites into and is fixed to the net 15 and at the same time, the non-crosslinked rubber 21 is crosslinked and bonded to the crosslinked rubber of the gasket 1.

When the non-crosslinked rubber 21 is melted while being pressed, a force to push the crosslinked rubber of the gasket 1 outward is exerted. Therefore, it is preferred to press the crosslinked rubber of the gasket 1 by the heating press heater 23 at the time of heating to prevent a force to push the crosslinked rubber of the gasket 1 outward.

Accordingly, the width of the heater for crosslinking the non-crosslinked rubber 21 is preferably such that the heater is overlaid on the gasket 1 side from about 5 to about 50 mm from the edge 5 as shown in Fig. 2. Further, inside the edge on the cavity side of the non-crosslinked rubber 21, the heater preferably protrudes from 0 to 20 mm, more preferably from 2 to 10 mm, so as to prevent insufficient crosslinking by protrusion of the non-crosslinked rubber, depending on the thickness of the non-crosslinked rubber 21.

The temperature of the heater, the heating time and the pressure at the heating portion of the heating press heater 23 vary depending upon the composition of the non-crosslinked rubber 21, the type of the crosslinking agent, etc., however, it is preferred that the heating temperature is from 100°C to 220°C, the pressure at the heating portion is from 0.05 MPa to 5.0 MPa, and the heating time is from 1 to 600 seconds.

Further, as a method of increasing the bonding property of the crosslinked rubber of the gasket 1 and the non-crosslinked rubber 21, it is preferred to coat the bonding surface of the crosslinked rubber with an adhesive for a rubber, or to use a rubber for bonding.

Further, it is preferred to coat the bonding surface of the crosslinked rubber of the gasket 1 with a non-crosslinked rubber dissolved in a solvent.

After completion of bonding of the edge 5 which is one side of the opening 3 as described above, bonding of an edge 5 which is an opposite side is carried out. However, bonding of both the sides may be carried out simultaneously. Further, with respect to the upper side and the lower side of the opening 3 in Fig. 1, no bonding may be carried out. However, it is preferred to carry out bonding similarly also with respect to the upper side and the lower side of the opening 3 of the gasket 1.

The disposition of the non-crosslinked rubber 21 and the heating press heater 23 is not limited to this order, and the non-crosslinked rubber 21 may be disposed on the lower side of the net 15, and the heating press heater 23 is disposed on the lower side of the non-crosslinked rubber 21.

The crosslinked rubber forming the gasket 1 comprises ethylene propylene rubber, and the ethylene propylene rubber to be used may be either an ethylene/propylene copolymer (EPM) or an ethylene/propylene/diene copolymer (EPDM). Further, the hardness of the crosslinked rubber is from 55 to 88 by the shore A hardness as specified in JIS K6253 (1993), whereby favorable sealing performance will be achieved, and it is more preferably from 70 to 83.

Further, as the surface shape of the gasket 1, a flat sheet with a smooth surface is preferred, whereby favorable sealing performance will be achieved. However, such a flat sheet may cause a drawback such that it is strongly bonded to the membrane, and the membrane and the chamber frame will not be separated from each other at the time of overhaul maintenance, and the membrane and the chamber frame cannot be recycled. Therefore, the surface of the gasket 1 is more preferably in a fabric form, whereby the membrane and the chamber frame are easily separated.

The rubber compositions of the crosslinked rubber of the gasket 1 and the non-crosslinked rubber 21 are not particularly limited, and rubber compositions having a rubber component, carbon black, silica or the like as a reinforcing agent, a crosslinking agent, a crosslinking accelerator, an aid of crosslinking accelerator, a softening agent, an antioxidant, an extender filler, and other known compounding agents for a rubber blended depending on their purpose of use and application, may be used.

Further, the non-crosslinked rubber 21 comprises ethylene propylene rubber, and the ethylene propylene rubber to be used may be either an ethylene/propylene copolymer (EPM) or an ethylene/propylene/diene copolymer (EPDM). The non-crosslinked rubber 21 may have the same composition as or may have a different composition from the crosslinked rubber of the gasket 1.

As the crosslinking agent to be blended in the non-crosslinked rubber 21, a known sulfur or peroxide crosslinking agent may, for example, be used. However, a peroxide crosslinking agent is more preferred, whereby a crosslinking agent which reacts at lower temperature can be selected.

Further, the 10-hour half-life temperature of the crosslinking agent is preferably 140°C, more preferably at most 120°C, whereby the processing time can be shortened, and the heat deformation of the net 15 at the time of processing can be prevented.

The peroxide crosslinking agent may, for example, be a dialkyl peroxide crosslinking agent, a peroxyketal crosslinking agent or a peroxyester crosslinking agent, and in view of the crosslinking temperature, a dialkyl peroxide crosslinking agent or a peroxyketal crosslinking agent is more preferred.

The material of the net 15 is not particularly limited and may be any material, however, a polypropylene or a polyethylene, which is easily available at a low cost and is excellent in the heat resistance and the chemical resistance, is desirable.

### EXAMPLES

Now, the present invention will be described in further detail with reference to Examples. However, it should be understood that the present invention is by no means restricted to such specific Examples.

In the following Examples, the hardness of a crosslinked rubber was measured as the shore A hardness as specified in JIS K6253.

### EXAMPLE 1

As a crosslinked rubber sheet to form a gasket 1 of a chamber frame 10, an EPDM sheet with the surface in a fabric form with a thickness of 0.6 mm and a hardness of 80 was selected, and cut into a frame having outer dimensions with a width of 180 mm and a length of 50 mm.

The cut crosslinked rubber sheet was set on a base 7, and inside the sheet, a net 15 made of a polyethylene to be a spacer at a flow path portion was disposed.

As a bonding agent, an EPDM non-crosslinked rubber 21 having sulfur as a sulfur crosslinking agent blended, having a width of 5 mm and a thickness of 0.6 mm, was disposed on the net 15 inside the frame-form sheet so that it was in contact with an edge 5 of an opening 3.

A heating press heater 23 having a width of 20 mm was used, to carry out heat welding at a heating temperature of 170°C for a heating time of 300 seconds under a press pressure of 1.0 MPa to obtain a chamber frame 10.

### EXAMPLE 2

In the same manner as in Example 1, a crosslinked rubber sheet for a gasket 1 comprising EPDM and a net 15 made of a polyethylene to be a spacer at a flow path portion were disposed. Then, as a bonding agent, an EPDM non-crosslinked rubber 21 having PERHEXA HC (manufactured by NOF Corporation) which is a peroxide crosslinking agent with a 10-hour half-life temperature of 87°C blended, having a width of 5 mm and a thickness of 0.6 mm, was disposed on the net 15 inside the frame-form sheet so that is was in contact with an edge 5 of an opening 3.

A heating press heater 23 having a width of 20 mm was used, to carry out heat welding at a heating temperature of 170°C for a heating time of 60 seconds under a press pressure of 1.0 MPa to obtain a chamber frame 10.

### EXAMPLE 3

As a crosslinked rubber sheet to form a gasket 1 of a chamber frame 10, an EPDM sheet with the surface in a fabric form with a thickness of 0.6 mm and a hardness of 60 was selected, and cut into a frame having outer dimensions with a width of 180 mm and a length of 50 mm.

The cut crosslinked rubber sheet was set on a base 7, and inside the sheet, a net 15 made of a polyethylene to be a spacer at a flow path portion was disposed.

Thereafter, the same operation as in Example 1 was carried out to obtain a chamber frame 10.

### COMPARATIVE EXAMPLE 1

As a crosslinked rubber sheet to form a gasket 1 of a chamber frame 10, an EPDM sheet with the surface in a fabric form with a thickness of 0.6 mm and a hardness of 40 was selected, and cut into a frame having outer dimensions with a width of 180 mm and a length of 50 mm.

The cut crosslinked rubber sheet was set on a base 7, and inside the sheet, a net 15 made of a polyolefin to be a spacer at a flow path portion was disposed.

Thereafter, the same operation as in Example 1 was carried out to obtain a chamber frame 10.

### COMPARATIVE EXAMPLE 2

As a crosslinked rubber sheet to form a gasket 1 of a chamber frame 10, an EPDM sheet with the surface in a fabric form with a thickness of 0.6 mm and a hardness of 90 was selected, and cut into a frame having outer dimensions with a width of 180 mm and a length of 50 mm.

The cut crosslinked rubber sheet was set on a base 7, and inside the sheet, a net 15 made of a polyolefin to be a spacer at a flow path portion was disposed.

Thereafter, the same operation as in Example 1 was carried out to obtain a chamber frame 10.

The chamber frames 10 obtained in Examples and Comparative Examples, and a conventional chamber frame of which a gasket 1 was made of ZELAS 8615L (manufactured by Mitsubishi Chemical Corporation, a polypropylene resin having a high molecular weight rubber finely dispersed) which is an olefin thermoplastic resin, were evaluated by the following heat resistance cycle test, and the results are shown in Table 1.

Heat resistance cycle test:
50 Pairs of chamber frames were assembled, and warm water of 80°C was passed under an inlet pressure of 0.1 MPa for 18 hours, and room temperature water of 25°C is passed for 6 hours for cooling. This heating/cooling cycle operation was repeatedly carried out to measure the amount (L/h) of leak out of the chamber frames depending upon the number of cycles.

**TABLE 1**

| Ex. | Amount (Uh) of leak out of chamber frames depending upon number of cycles | | | |
|---|---|---|---|---|
| | Initial | 1st | 2nd | 10th |
| Ex. 1 | NL | NL | NL | NL |
| Ex. 2 | NL | NL | NL | NL |
| Ex. 3 | NL | NL | NL | NL |
| Comp. Ex. 1 | Not evaluated | - | - | - |
| Comp. Ex. 2 | 0.42 | Not evaluated | - | - |
| Conventional chamber frame | 0.05 | 0.15 | 0.35 | 12 |

In Table 1, "NL" means no leak was observed.

Further, "number of cycles" means the number of heating/cooling cycles.

In Examples 1, 2 and 3, as compared with a conventional chamber frame, excellent heat resistance was achieved, and in the heat resistance cycle test, no deformation of the gasket 1 and no increase in the amount of leak out of the chamber frames were observed. Further, at the time of forming the chamber frame 10, no sag of the net was observed, and a favorable thickness accuracy of the chamber frame 10 was achieved.

In Comparative Example 1, since the hardness of the crosslinked rubber sheet forming the gasket 1 of the chamber frame 10 was so low as 40, there were many drawbacks in positioning at the time of assembling membranes, folding of the a chamber frame, protrusion of the chamber at the time of clamping, and deformation, and a chamber frame 10 with only a small amount of leak was not able to be formed, and the heat resistance cycle test was not able to be conducted.

Further, in Comparative Example 2, since the hardness of the crosslinked rubber sheet forming the gasket 1 of the chamber frame 10 was so high as 90, the amount of leak out of the chamber frames at the initial stage after assembling was large.

### REFERENCE SYMBOLS

1: Gasket
3 Opening
5: Edge
7: Base
9,11: Communicating port
10: Chamber frame
13: Distributor
15: Net
17: Supply duct hole
21: Non-crosslinked rubber
23: Heating press heater

## Claims

1. A method for producing a chamber frame for a dialytic cell, which comprises:
disposing a net made of a plastic to a cavity inside an edge of an opening formed on a gasket of a crosslinked rubber comprising ethylene propylene rubber having a shore A hardness as specified in JIS K6253 of from 55 to 88, without or with a certain gap with the edge; and
disposing a non-crosslinked rubber comprising ethylene propylene rubber on the upper side or lower side of the net without or with a certain gap with the edge, disposing a heating press heater on the opposite side of the non-crosslinked rubber from the net side, and pressing the non-crosslinked rubber against the net while heating the non-crosslinked rubber by the heating press heater to crosslink the non-crosslinked rubber, thereby to attach the gasket and the net to each other.

2. The method for producing a chamber frame for a dialytic cell according to Claim 1, wherein the heating press heater is disposed so that its side edge on the gasket side protrudes outside the edge of the opening over one side edge of the non-crosslinked rubber, so as to cover a part of the gasket, and/or so that its side edge on the net side protrudes above the cavity inside the edge of the opening over the other side edge of the non-crosslinked rubber, so as to cover a part of the net.

3. The method for producing a chamber frame for a dialytic cell according to Claim 1 or 2, wherein the sheet surface of the gasket is in a fabric form.

4. The method for producing a chamber frame for a dialytic cell according to any one of Claims 1 to 3, wherein the material of the net is a polypropylene or a polyethylene.

5. The method for producing a chamber frame for a dialytic cell according to any one of Claims 1 to 4, wherein the non-crosslinked rubber contains as a crosslinking agent a peroxide crosslinking agent having a 10-hour half-life temperature of at most 120°C.

6. The method for producing a chamber frame for a dialytic cell according to any one of Claims 1 to 5, wherein the heating press heater has a size with a length of from 200 mm to 2,000 mm and a width of from 5 mm to 70 mm.

7. The method for producing a chamber frame for a dialytic cell according to any one of Claims 1 to 6, wherein the non-crosslinked rubber is pressed against the net while being heated by the heating press heater, under a pressure of from 0.05 MPa to 5.0 MPa at a heating temperature of from 100°C to 180°C for a heating time of from 1 to 600 seconds.
